# EUROPEAN PATENT SPECIFICATION

(11) **EP 1 185 414 B1**
(45) Date of publication and mention of the grant of the patent: **03.09.2003**
(21) Application number: 00929740.9
(22) Date of filing: 02.06.2000
(51) Int. Cl.: B29D 31/00

(54) **MACHINE FOR AUTOMATICALLY COVERING ROLLERS WITH TUBULAR SHEATHS OF HIGH ADHERENCE MATERIAL**
MASCHINE ZUR AUTOMATISCHEN BESCHICHTUNG VON ROLLEN MIT EINER ROHRFÖRMIGEN HÜLLE AUS MATERIAL HOHER HAFTFESTIGKEIT
MACHINE PERMETTANT DE RECOUVRIR AUTOMATIQUEMENT LES ROULEAUX DE GAINES TUBULAIRES FABRIQUEES DANS UN MATERIAU A FORTE ADHERENCE

(30) Priority: 10.06.1999 IT MO990128
(43) Date of publication of application: 13.03.2002
(73) Proprietor: Finmart S.r.l., 42010 Veggia di Casalgrande (IT)
(72) Inventor: LUPPI, Andrea, I-41100 Modena (IT)
(74) Representative: Frignoli, Luigi
(86) International application number: IB0000743
(87) International publication number: WO00076756

(56) References cited:
- GB-A- 789 969
- US-A- 4 686 755
- US-A- 4 993 133

## Description

### Technical field

This invention relates to a machine for automatically covering rollers with tubular sheaths of adherent elastic material.

### Background art

Conveying surfaces for goods of various kinds have for some time been formed from rollers having their outer surface covered with sheaths of mainly elastomeric materials, both to prevent the goods slipping during conveying and to reduce the effect of jolting on the conveyed products along the conveying path.

Such rollers are still produced mainly manually or semiautomatically. In practice, in the manual method one or more operators draw the tubular sheath produced in rolls onto tubes of various lengths, facilitated by using substances which aid slippage between the contacting surfaces.

The semi-automatic method uses a machine having a base provided with a support on which a tube piece of predefined length is positioned and over which, using a gripper mounted on a carriage movable parallel to the tube, the sheath is progressively pulled, again using substances facilitating slippage between the tube outer surface and the sheath inner surface.

Both the aforedescribed methods of operation have drawbacks.

In the case of the manual procedure, the time required to implement the complete operating cycle is very lengthy, the operation being very fatiguing and costly, requiring the assistance of one or more operators.

In the case of the semi-automatic procedure, the gripper covers the tubes by traction, resulting in contraction of the useful sheath cross-section, with consequent increase in the resistance to its drawing over the tubes, which has therefore to be aided by previously spreading interposed substances facilitating slippage between the contacting surfaces. However, as these substances cannot be completely eliminated they remain in situ so tending, when the rollers are used under load, to induce torsional slippage of the sheaths on the tubes, this slippage causing the products to rotate on the conveying surfaces because of speed differences between the roller outer surfaces, together with damage to the sheaths which, once rotated about their longitudinal axis, are subjected locally to abnormal stress conditions.

In US-A-4 993 133 and GB 789 969, machines are disclosed which comprise support means for supporting a roller having pushing means for pushing the rear end of the supported roller, guide means in which the sheath portion is contained, gripping means positioned at the front end of guide means to securely grip the sheath and means for feeding compressed air into the sheath portion, whereby the roller is inserted axially into the sheath and removed as covered roller from the machine.

In US-A-4686755 a body is inserted into a relatively thick coating of elastic material by first expanding a sleeve of said material, which is closed at one end, under the action of compressed air.

However, the operations described in the above documents involves a heavy and time-consuming man participation to operate and to manipulate the pieces, together with wasting of part of the sheath.

The object of this invention is to solve the aforesaid problems by providing a machine for automatically covering rollers with tubular sheaths of high-adherence elastic material which enables this operation to be performed substantially automatically, with complete use of the sheath, without any waste.

### Disclosure of the invention

This object is attained according to the invention by a machine for automatically covering rollers with tubular sheaths of adherent elastic material as defined in claim 1. Particular embodiments of the invention are the subject of the dependent claims.

Further advantages of the invention will be more apparent from the ensuing description of a preferred embodiment of a machine for automatically covering rollers with tubular sheaths of high- adherence elastic material illustrated by way of non-limiting example on the accompanying drawings, on which:

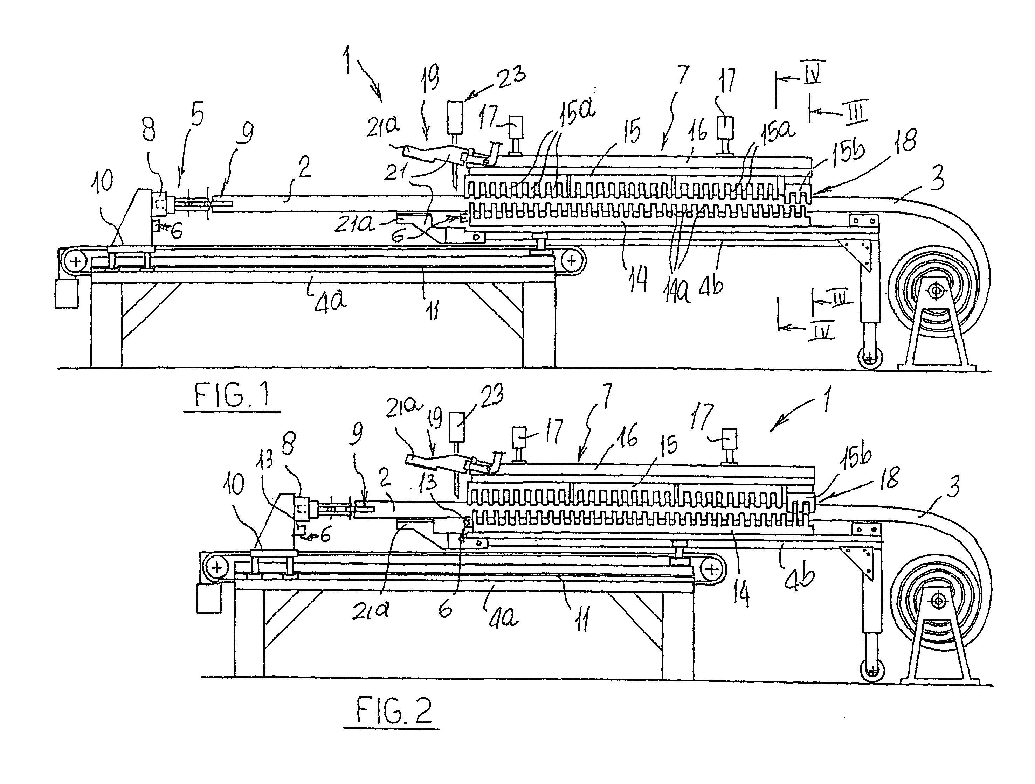

Figure 1 is a schematic side view of the automatic roller covering machine of the invention in its maximum elongation configuration for covering rollers of large length;

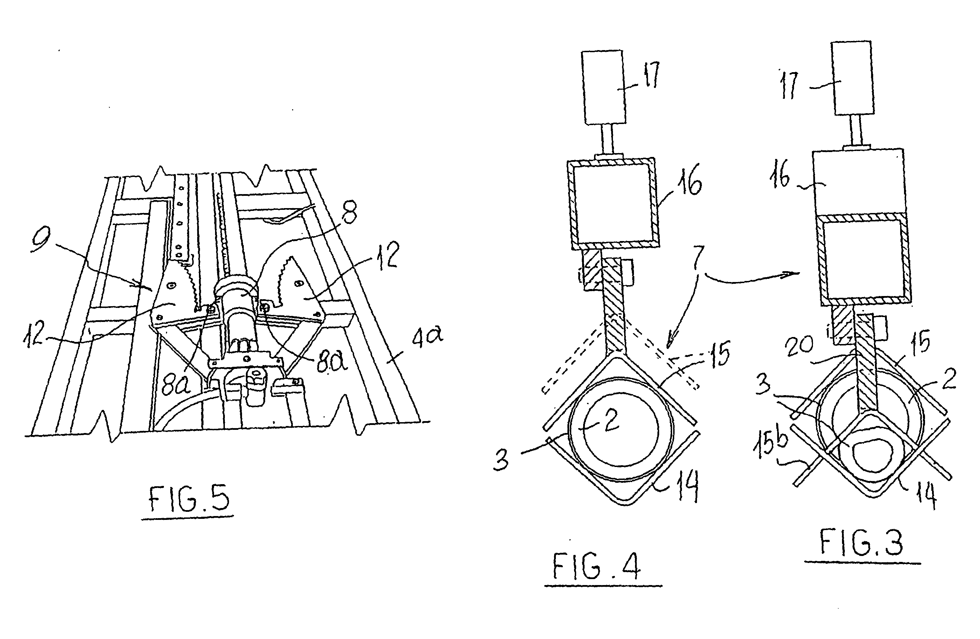

Figure 2 shows the same machine of the invention in its medium elongation configuration for covering rollers of small length; Figure 3 is a schematic cross-section through the machine of the invention on the plane III-III of Figure 1;
Figure 4 is a schematic cross-section through the machine of the invention, as in Figure 3, taken on the plane IV-IV of Figure 1;
Figure 5 is a detailed view of one embodiment of the horizontal support means for the rollers to be covered.
With particular reference to the aforesaid figures, the reference numeral 1 indicates overall a machine for automatically covering rollers 2 with tubular sheaths 3 of high-adherence elastic material. The machine 1 consists essentially of an extendable bed composed of at least two half-beds 4a and 4b connected together telescopically. Of these, a first half-bed 4a is provided with means 5 for horizontally supporting the rollers 2 to be covered, and movable with outward and return travel between two end positions determinable by relative means 6 on the basis of the length of the rollers 2, they being provided between the rollers 2 and the tubular sheaths 3 with compressed air feed means, not shown in detail for simplicity but described hereinafter.

A second half-bed 4b is provided with means 7 for gripping the various portions of tubular sheaths used and maintaining them guided.

The means 5 for supporting the rollers 2 consist of a cylindrical headpiece 8 into which one end of each roller 2 can sealedly fit, and which is provided with members 9 for gripping said ends. The headpiece 8 is mounted on a relative carriage 10 movable forwards and rearwards on suitable horizontal guides 11 rigid with said first half-bed 4a.

The gripping members 9 consist of at least one pincer with horizontal jaws 12 pivoted bilaterally to the cylindrical headpiece 8 and able to penetrate into it to grip the front end of each roller 2 via corresponding longitudinal slots 8a provided in the headpiece 8 in diametrically opposite positions.

The means 6 for determining the travel of said means 5 for supporting the rollers 2, as stated consisting of the carriage 10 and the relative cylindrical headpiece 8, consist of corresponding end-of-travel sensors 13 positioned in facing combination on said carriage 10 and on the front end of the second half-bed 4b.

The means 7 for maintaining the tubular sheath portions 3 guided consist of a cradle-shaped guide 14 provided with comb-like walls having upwardly pointing teeth 14a, the guide 14 being rigidly fixed to the upper face of the second half-bed 4b and cooperating with an upper counter-guide 15 supported on a longitudinal support member 16 driven with vertical reciprocating movement by relative actuator means 17 interposed between it and said second half-bed 4b. The counter-guide 15 is also cradle-shaped with comb-like walls having lowerly pointing teeth 15a vertically aligned with the interspaces between the teeth 14a of the guide 14 in order to copenetrate with them when closed. Said means 14, 15 define for a sheath portion a guide channel of length substantially equal to the length of the roller 2 (and hence of the sheath portion) and of cross-section substantially equal to the cross-section of the sheath.

Both at the front and rear end of said guide 14 and counter-guide 15 there are provided gripping means 18 and means 19 for guiding the ends of the tubular sheath portions.

The gripping means 18 provided at the front end consist of a segment 15b of the actual upper counter-guide 15 positionable rigidly, in this case by means of a vertical rib segment 20, below said longitudinal member 16 at a fixed level lower than the comb-like walls of said counter-guide 15 and horizontally offset from it.

The guide means (and in part gripping means) 19 provided at the rear end consist of a gripper with its jaws 21 movable in a vertical plane coinciding with the longitudinal axis of the rollers 2 and arranged to retain the projecting end of these. Advantageously, the jaws 21 are provided at their far ends with corresponding appendices 21a ensuring centered gripping and for this purpose forming, when in their closed configuration, the opposing facing cavities of a hollow seat representing the ideal prolongation of said guide 14 and said counter-guide 15.

In the preferred version of the machine 1 both the guide 14 and the counter-guide 15 are divided into usable submultiple adjacent sections supported by said longitudinal member 16 in a number dependent on the length of the rollers 2 to be covered.

The compressed air feed means consist of a conventional compressed air production apparatus which is connected via a suitable connector to that end of the sheath 3 distant from that into which the roller 2 is inserted, and is arranged to expand the covering sheath portions by air injection while they are being drawn onto the rollers 2.

The machine of the invention operates in the following manner: the half-beds 4a and 4b are positioned in accordance with the length of a batch of rollers 2 to be covered, by sliding the half-bed 4b on the half-bed 4a then locking the former to the latter by known means. An operator then arranges a roller 2 to be covered by inserting one of its ends into the headpiece 8, in which it is retained airtight, then resting the opposite end on the appendix 21a of the suitably open lower jaw 21.

The guide 14 and the counter-guide 15 are also positioned in the open state, the operator then gripping the end of a reel 22 of tubular sheath 3 and bringing it firstly into contact with the opposite end of the roller 2 to be covered, then forcing it slightly onto this end.

The counter-guide 15 is closed onto the guide 14 by the actuators 17 to an extent such as to axially retain the sheath portion 3 of length equal to the length of the roller 2 for which it is intended. Simultaneously the lower segment 15b on the upper counter-guide 15 forcibly clamps the end section of said sheath portion 3 to maintain it at rest.

The jaws 21a are also closed onto the roller 2 but without pressing against it, so as merely to maintain it axially guided.

The compressed air production apparatus begins to feed air, which flows into the sheath 3 to which it is connected, causing it to expand radially by a few millimetres.

Simultaneously the carriage 10 commences its forward travel towards the half-bed 4b, resulting in progressive insertion of the roller 2 into the sheath 3, facilitated by said expansion.

Penetration of the roller 2 into the sheath 3 is made possible by the guiding action of the channel formed by the guide 14 and counter-guide 15 and the gripping action of the means 15b, which grip the sheath at the front end of the guide channel. The sheath portion 3 enclosed within the guide channel and subjected to the pressure of the air fed into the sheath 3 is maintained, by the pressure of the air fed into its interior, in its radially expanded rectilinear configuration against the means 14 and 15, in this configuration it being penetrated by the roller 2 as the axial penetration thrust is applied to the sheath 3 at a point upstream of the guide channel (ie at the gripping means 15b).

As the gripping means operate at a point in which the sheath 3 has not yet been drawn onto the roller 2, the contraction in the sheath cross-section produced by these does not obstruct the penetration of the roller 2 into the sheath 3.

When the carriage has reached its preset end-of-travel position, detected by the sensors 13, it stops moving because at this stage the roller has been completely covered by the relative sheath portion 3.

Before the carriage 10 stops, the jaws 21a open, having now fulfilled their purpose.

When stoppage has occurred, the guides 14 and 15 also open and that end of the roller 2 inside the headpiece 8 can be gripped by the jaws 12, which enter the headpiece 8 through the longitudinal slots 8a.

The carriage 10 then undergoes its return travel dragging with it both the covered roller, and the sheath 3 through a portion of length equal to the length of the covered roller 2, this portion being automatically deposited in the guide 14.

A conventional cutting member, indicated on the drawings by 23, then cuts through the sheath 3 at the end of the covered roller 2, and simultaneously arranges the front end of the sheath 3 for a new roller 2.

Finally, the jaws 12 are opened and the covered roller 2 can be extracted from the machine 1.

If a batch of short-length rollers is to be covered, after positioning the two half-beds 4a and 4b at the correct distance apart one or more sections of said guide 14 and counter-guide 15 can be removed from the longitudinal member 16 and the remainder be moved into abutting contact, and the segment 15b then be fixed to the longitudinal member 16.

It has been found in practice that the described invention attains the stated objects.

Numerous modifications and variants can be applied to the invention conceived in this manner, all falling within the scope of the inventive concept.

Moreover all details can be replaced by others technically equivalent.

In practice the materials used and the shapes and dimensions can be chosen according to requirements, but without leaving the scope of protection of the following claims.

## Claims

1. A machine for automatically covering rollers with tubular sheaths of adherent elastic material comprising:
a roll of sheath (3) of indeterminate length,
support means (5) for supporting one roller (2) at a time having head means (8) and
first gripping means (9) for moving and gripping the rear end of the supported roller (2),
guide means (14, 15) defining a guide channel in which a sheath portion is contained
substantially as an exact fit about its cross-section,
second gripping means positioned at the front end of the guide channel to securely grip the sheath (3),
means (10) for axially moving said head means (8) and gripping means (9) on
horizontal path relative to the guide means (14,15) and to the second gripping means (15b), in a forward travel and in a rearwards travel;
means for feeding compressed air into the sheath portion to produce a progressive insertion of the roller (2) into the sheath (3) in combination with the movement of said head means (8) and gripping means (9) in the forward travel;
said head means (8) and gripping means (9) dragging the covered roll and the sheath (3) through a portion of length equal to the length of the covered roller (2), in the rearward travel;
cutting means (23) for cutting the sheath (3) at the end of the covered roller (2).

2. A machine as claimed in claim 1, **characterised by** comprising an extendable bed composed of at least two half-beds (4a, 4b) connected together telescppically, and of which a first half-bed (4a) carries, for the rollers (2) to be covered, said horizontal support means (5) movable with outward and return travel between two end positions determinable by relative means on the basis of the length of me rollers (2), the second half-bed (4b) carrying the gripping means (15b) and guide means (14, 15) for the tubular sheath portions.

3. A machine as claimed in claim 2, **characterised in that** said roller support means (5) comprise a cylindrical headpiece (8) into which one end of each roller can sealedly fit, and which is provided with members (9) for gripping these ends, the headpiece (8) being mounted on a relative carriage (10) movable forwards and rearwards on suitable horizontal guides.

4. A machine as claimed in claim 1, **characterised in that** said gripping members (9) consist of at least one pincer with horizontal jaws (12) pivoted bilaterally to the cylindrical headpiece (8) and able to penetrate into it to grip the front end of each roller via corresponding longitudinal slots (8a) provided in the headpiece (8) in diametrically opposite positions.

5. A machine as claimed in claim 3, **characterised in that** said means for determining the travel of said roller support means (5) consist of corresponding end-of-traval sensors (13) positioned on said carriage (10) and on the front end of said second half-bed (4b).

6. A machine as claimed in claim 3, **characterised in that** said guide means (14,15) or tubular sheath portions comprise a cradle-shaped guide (14) provided with comb-like walls having upwardly pointing teeth, and cooperating with an upper counter-guide (15) also cradle-shaped with comb-like walls having lowerly pointing teeth vertically aligned with the interspaces between the teeth of the first guide in order to copenetrate with them, means (17) being provided to cause said guide (14) and counter-guide (15) to transversely approach and withdraw from each other.

7. A machine as claimed in claim 6, **characterised in that** on the front end of said guide (14) and counter-guide (15) there are provided means (18) for gripping the tubular sheath, these comprising a segment (15b) of said upper counter-guide positionable rigidly below said longitudinal member at a fixed level lower than the comb-like walls of said counter-guide (15).

8. A machine as claimed in claim 6, **characterised in that** on the rear end of said guide (14) and counter-guide (15) there are provided guide means (19) for the tubular sheath, these comprising a gripper with its jaws (2) movable in a vertical plane coinciding with the longitudinal axis of the rollers and arranged to support the Projecting end of these.

9. A machine as claimed in claim 8, **characterised in that** said jaws (21) are provided at their far ends with corresponding centered gripping appendices (21a) forming, when in their closed configuration, the opposing facing cavities of a hollow seat representing the ideal prolongation of said guide (14) and said counter-guide (15).

10. A machine as claimed in claim 6, **characterised in that** said guide (14) and counter-guide (15) are divided into usable submultiple adjacent sections supported by said longitudinal member (16) in a number dependent on the length of the rollers to be covered.

11. A machine as claimed in claim 1, **characterised in that** said air feed means consist of at least one compressed air production apparatus which is connected via a relative airtight connector to that end of the sheath distant from the insertion end, and arranged to expand the covering sheath by air injection while they are being drawn onto the rollers.

12. A machine as claimed in claim 6, **characterised in that** said guide (14) is rigidly fixed to the upper face of the second half-bed (16), said upper counter-guide (15) being supported on a longitudinal support member (16) driven with vertical reciprocating movement by relative actuator means (17) interposed between it and said second half- bed (4b).

## Patentansprüche

1. Maschine zum automatischen Ummanteln von Rollen mit röhrenförmigen Hüllen aus einem klebenden elastischen Material umfassend:
eine Rolle einer Hülle (3) einer unbestimmten Länge,
Haltemittel (5) zum Halten jeweils einer Rolle (2) mit Kopfmitteln (8) und ersten Greifmitteln (9) zum Bewegen und Greifen des hinteren Endes der gehaltenen Rolle (2),
Führungsmittel (14, 15), die einen Führungskanal, in welchem ein Hüllenabschnitt enthalten ist, im Wesentlichen als eine genaue Passung um seinen Querschnitt definieren,
zweite Greifmittel, die sich am vorderen Ende des Führungskanals befinden, um die Hülle (3) sicher zu greifen,
Mittel (10) zum axialen Bewegen der Kopfmittel (8) und Greifmittel (9) auf einer horizontalen Bahn relativ zu den Führungsmitteln(14,15)und zu den zweiten Greifmitteln (15b) auf einem Hinweg und auf einem Rückweg;
Mittel zum Zuführen von Druckluft in den Hüllenabschnitt, um eine progressive Einführung der Rolle (2) in die Hülle (3) in Kombination mit der Bewegung der Kopfmittel (8) und Greifmittel (9) auf dem Hinweg zu bewirken;
wobei die Kopfmittel (8) und Greifmittel (9) die ummantelte Rolle und die Hülle (3) durch einen Abschnitt mit einer Länge, die der Länge der ummantelten Rolle (2) gleich ist, auf dem Rückweg ziehen;
Schneidemittel (23) zum Schneiden der Hülle (3) am Ende der ummantelten Rolle (2).

2. Maschine nach Anspruch 1,
**dadurch gekennzeichnet,**
**dass** sie ein verlängerbares Bett aus zumindest zwei teleskopartig miteinander verbundenen Betthälften (4a, 4b) umfasst, und wovon eine erste Betthälfte (4a) für die zu ummantelnden Rollen (2) die horizontalen Halterungsmittel (5) trägt, die zwischen zwei auf Basis der Länge der Rollen (2) durch relative Mittel bestimmbare Endstellungen nach außen und zurück bewegbar sind, wobei die zweite Betthälfte (4b) die Greifmittel (15b) und die Führungsmittel (14, 15) für die röhrenförmigen Hüllenabschnitte trägt.

3. Maschine nach Anspruch 2,
**dadurch gekennzeichnet,**
**dass** die Rollenhalterungsmittel (5) ein zylindrisches Kopfteil (8), in welches ein Ende jeder Rolle abgedichtet passen kann, und welches mit Teilen (9) zum Greifen dieser Enden versehen ist, wobei das Kopfteil (8) auf geeigneten horizontalen Führungen vorwärts und rückwärts bewegbar auf einem relativen Wagen (10) angebracht ist.

4. Maschine nach Anspruch 1,
**dadurch gekennzeichnet,**
**dass** die Greifmittel (9) aus zumindest einer Kneifzange mit horizontalen Zangenbacken (12) besteht, die beidseitig zu dem zylindrischen Kopfteil (8) schwenkbar und in der Lage sind, in dieses einzudringen, um das vordere Ende von jeder Rolle über entsprechende in dem Kopfteil (8) an diametral gegenüber liegenden Stellen vorhandenen Längsschlitzen (8a) zu greifen.

5. Maschine nach Anspruch 3,
**dadurch gekennzeichnet,**
**dass** die Mittel zum Bestimmen des Weges der Rollenhalterungsmittel (5) aus entsprechenden Ende-des-Weges-Sensoren (13) bestehen, die sich auf dem Wagen (10) und auf dem vorderen Ende der zweiten Betthälfte (4b) befinden.

6. Maschine nach Anspruch 3,
**dadurch gekennzeichnet,**
**dass** die Führungsmittel (14, 15) für die röhrenförmigen Hüllenabschnitte eine gabelförmige Führung (14) umfassen, die mit kammähnlichen Wänden mit aufwärts zeigenden Zähnen ausgestattet ist, und die mit einer oberen auch gabelförmigen Gegenführung (15) mit kammähnlichen Wänden, die nach unten zeigende Zähne besitzt, die senkrecht zu den Zwischenräumen zwischen den Zähnen der ersten Führung ausgerichtet sind, um zusammen mit diesen einzudringen, zusammenarbeitet, wobei Mittel (17) vorhanden sind, damit die Führung (14) und Gegenführung (15) sich diagonal aufeinander zu bewegen und voneinander weg bewegen.

7. Maschine nach Anspruch 6,
**dadurch gekennzeichnet,**
**dass** auf dem vorderen Ende der Führung (14) und Gegenführung (15) dort Mittel (18) zum Greifen der röhrenartigen Hülle vorhanden sind, wobei diese ein Segment (15b) der oberen Gegenführung umfassen, das unter dem Längsteil auf einem feststehenden Niveau tiefer als die kammähnlichen Wände der Gegenführung (15) stabil positionierbar ist.

8. Maschine nach Anspruch 6,
**dadurch gekennzeichnet,**
**dass** auf dem rückseitigen Ende der Führung (14) und Gegenführung (15) dort Führungsmittel (19) für die röhrenartige Hülle vorhanden sind, wobei diese einen Greifer umfassen, dessen Klauen (21) in einer senkrechten mit der Längsachse der Rollen übereinstimmenden Ebene bewegbar und angeordnet sind, um deren herausragenden Enden zu halten.

9. Maschine nach Anspruch 8,
**dadurch gekennzeichnet,**
**dass** die Klauen (21) an ihren entfernten Enden mit entsprechend zentrierten Greifzusätzen (21a) ausgestattet sind, die in ihrem geschlossenen Zustand die gegenüber liegenden Oberflächenaushöhlungen eines Hohlsitzes bilden, wobei dadurch die ideale Verlängerung der Führung (14) und Gegenführung (15) repräsentiert wird.

10. Maschine nach Anspruch 6,
**dadurch gekennzeichnet,**
**dass** die Führung (14) und Gegenführung (15) in einsetzbare benachbarte Teilsektionen, die von dem Längsteil (16) gehalten werden, unterteilt sind, wobei die Anzahl von der Länge der zu ummantelnden Rollen abhängt.

11. Maschine nach Anspruch 1,
**dadurch gekennzeichnet,**
**dass** die Luftzuführungsmittel aus zumindest einer Druckluft erzeugenden Vorrichtung bestehen, welche über ein relatives luftdichtes Verbindungsteil mit demjenigen Ende der Hülle verbunden ist, das vom eingeführten Ende entfernt ist, und angeordnet ist, um die ummantelnde Hülle durch Lufteinblasen zu dehnen, während sie auf die Rollen gezogen wird.

12. Maschine nach Anspruch 6,
**dadurch gekennzeichnet,**
**dass** die Führung (14) stabil mit der Oberseite der zweiten Betthälfte (14b) befestigt ist, wobei die Gegenführung (15) auf einem Längshalterungsteil (16) gehalten wird, das mit einer senkrechten hin- und hergehenden Bewegung durch relative Betätigungsmittel (17), die zwischen ihm und der zweiten Betthälfte (14b) liegen, angetrieben wird.

## Revendications

1. Une machine conçue pour recouvrir automatiquement des rouleaux à l'aide de gaines tubulaires de matière adhérente élastique comprenant :
un rouleau de gaine (3) de longueur indéterminée,
un dispositif de support (5) pour maintenir un seul rouleau (2) à la fois présentant un dispositif de tête (8) et un premier dispositif de serrage (9) destiné à serrer et déplacer l'extrémité arrière du rouleau maintenu (2),
un dispositif de guidage (14, 15) définissant un canal de guidage dans lequel pratiquement toute la section transversale de la gaine est contenue,
un deuxième dispositif de serrage placé à l'extrémité avant du canal de guidage destiné à serrer et maintenir fermement la gaine (3),
un dispositif (10) destiné à mouvoir de façon axiale le dispositif de tête (8) et à mouvoir le dispositif de serrage (9) horizontalement par rapport au dispositif de guidage (14, 15) et au deuxième dispositif de serrage (15b) vers l'avant et l'arrière;
un dispositif destiné à alimenter la section de gaine en air comprimé afin de réaliser une insertion progressive du rouleau (2) dans la gaine (3) en suivant le mouvement du dispositif de tête (8) et la course vers l'avant du dispositif de serrage (9);
les dispositifs de tête (8) et de serrage (9), **caractérisés en ce qu'**ils entraînent le rouleau recouvert et la gaine (3) vers l'arrière, sur une section de longueur égale à la longueur du rouleau recouvert (2) ;
un dispositif de coupe (23) pour couper la gaine (3) au bout du rouleau recouvert (2).

2. Une machine conformément à la revendication 1 **caractérisée en ce qu'**elle comprend un banc extensible composé d'au moins deux demi-bancs (4a et 4b), reliés entre eux de façon télescopique et positionnés de manière à ce qu'un premier demi-banc (4a) soutienne le dispositif de support (5) du rouleau à recouvrir (2), ledit dispositif de support (5) pouvant se déplacer entre deux positions déterminées en fonction de la longueur des rouleaux (2), et à ce que le deuxième demi-banc (4b) supporte le dispositif de serrage (15b) et le dispositif de guidage (14,15) sur les sections de gaine tabulaire.

3. Une machine conformément à la revendication 2 **caractérisée en ce que** le dispositif de support des rouleaux (5) comprend un chapeau cylindrique (8) dans lequel une extrémité du rouleau peut être fixée de façon sûre et qui dispose de deux éléments (9) de sérrage de ladite extrémité ; le chapeau (8) pouvant être monté sur un chariot (10) mobile vers l'avant et l'arrière selon une course de guidage horizontale.

4. Une machine conformément à la revendication 1 **caractérisée en ce que** les éléments de serrage (9) comprennent au moins une pince à mâchoires horizontales (12) pouvant s'ouvrir des deux côtés autour du chapeau cylindrique (8) et pouvant y pénétrer afin de maintenir l'extrémité avant de chaque rouleau par des encoches longitudinales correspondantes (8a) présentes sur le chapeau (8) et placées de manière à être diamétralement opposées.

5. Une machine conformément à la revendication 3, **caractérisée en ce que** le dispositif de détermination de la course du dispositif de support des rouleaux (5) consiste en un élément dé détection de fin de course (13) placé sur le chariot (10) et à l'avant du deuxième demi-banc (4b).

6. Une machine conformément à la revendication 3, **caractérisée en ce que** le dispositif de guidage (14, 15) des sections de gaine tubulaire comprend un guide en forme de berceau (14) présentant des parois constituant une sorte de plaque à créneaux et ayant des dents orientées vers le bas agissant en même temps qu'un contre-guide supérieur (15), lui aussi en forme de berceau, ayant des parois constituant également une plaque à créneaux présentant des dents orientées vers le bas, verticalement alignées par rapports aux espaces entre les dents du premier guide de manière à ce que les dents puissent s'emboîter; ledit dispositif (12) étant réalisé de façon à ce que ledit guide (14) et ledit contre-guide (15) s'approchent et s'éloignent de façon transversale l'un par rapport à l'autre.

7. Une machine conformément à la revendication 5, **caractérisée en ce que** l'extrémité avant du guide (14) et du contre-guide (15) présentent un dispositif (18) de serrage de la gaine tubulaire comprenant un segment (15 b) du contre-guide supérieur que l'on peut placer sous ledit élément longitudinal à un niveau défini plus bas que les parois en créneaux du contre-guide (15).

8. Une machine conformément à la revendication 6, **caractérisée en ce que** l'extrémité arrière desdits guide (14) et contre-guide (15) présente un dispositif de guidage (19) de la gaine tubulaire comprenant une pince de préhension à mâchoires (21) pouvant se déplacer verticalement, selon un axe coïncidant avec l'axe longitudinal de déplacement des rouleaux et disposées de manière à supporter l'extrémité saillante de ces derniers.

9. Une machine conformément à la revendication 8, **caractérisée en ce que** lesdites mâchoires (21) disposent, à leurs extrémités, d'éléments de serrage centrés (21a) qui forment, lorsqu'ils sont fermés, les cavités décalées d'un logement creux constituant la parfaite prolongation desdits guide (14) et contre-guide (15).

10. Une machine conformément à la revendication 8, **caractérisée en ce que** lesdits guide (14) et contre-guide (15) sont divisés en sections adjacentes utilisables soutenues par ledit élément longitudinal (16) dont le nombre dépend de la longueur des rouleaux à recouvrir.

11. Une machine conformément à la revendication 1, **caractérisée en ce que** le dispositif d'alimentation en air comprend au moins un appareil de production d'air comprimé relié par un connecteur étanche à l'air, à l'extrémité de la gaine opposée à l'extrémité d'insertion, et conçu de manière à étendre la gaine de recouvrement par injection d'air au fur et à mesure qu'elle est appliquée sur les rouleaux.

12. Une machine conformément à la revendication 6, **caractérisée en ce que** le guide (14) est fixé fermement à la face supérieure du second demi-banc (4 b), ledit contre-guide supérieur (15) étant soutenu par un élément de support longitudinal (16) animé d'un mouvement vertical de va-et-vient grâce à un dispositif d'actionnement (17) interposé entre ce dernier et ledit second demi-banc (4b).
